# EUROPÄISCHE PATENTSCHRIFT

(11) **EP 1 738 940 B1**
(45) Veröffentlichungstag und Bekanntmachung des Hinweises auf die Patenterteilung: **18.02.2009**
(21) Anmeldenummer: 06012819.6
(22) Anmeldetag: 22.06.2006
(51) Int. Cl.: B60G 17/015, B60G 17/052

(54) **Luftfederungseinrichtung mit Drossel für Fahrzeuge**
Air suspension comprising flow restrictors for vehicles
Suspension pneumatique avec d'obturateur pour véhicule

(30) Priorität: 28.06.2005 DE 102005030467
(43) Veröffentlichungstag der Anmeldung: 03.01.2007
(73) Patentinhaber: KNORR-BREMSE SYSTEME FÜR NUTZFAHRZEUGE GMBH, 80809 München (DE)
(72) Erfinder: Hecker, Falk, 71706 Markgröningen (DE); Fecht, Günther, 71691 Freiberg (DE); Geiger, Winfried, 75417 Mühlacker (DE); Röther, Friedbert, 74389 Cleebronn (DE)
(74) Vertreter: Schönmann, Kurt

(56) Entgegenhaltungen:
- EP-A- 0 378 202
- EP-A- 0 890 463
- DE-A1- 4 243 577
- DE-A1- 19 515 255
- PATENT ABSTRACTS OF JAPAN Bd. 013, Nr. 398 (M-866), 5. September 1989 (1989-09-05) -& JP 01 141111 A (KAYABA IND CO LTD), 2. Juni 1989 (1989-06-02)

## Beschreibung

### Stand der Technik

Die Erfindung geht aus von einer Luftfederungseinrichtung für Fahrzeuge, insbesondere für Nutzfahrzeuge, beinhaltend wenigstens ein einem Luftbalg oder einer Gruppe von Luftbälgen der Vorderachse zugeordnetes Luftbalgventil zum individuellen Be- und Entlüften dieses Luftbalgs oder dieser Gruppe von Luftbälgen, wenigstens ein einem Luftbalg oder einer Gruppe von Luftbälgen der Hinterachse zugeordnetes Luftbalgventil zum individuellen Be- und Entlüften dieses Luftbalgs oder dieser Gruppe von Luftbälgen, sowie wenigstens ein zentrales Belüftungsventil zum Versorgen der den Luftbälgen der Vorderachse und der Hinterachse zugeordneten Luftbalgventilen mit Druckluft aus einem Druckluftvorrat und wenigstens ein zentrales Entlüftungsventil zum Abführen von Druckluft von den den Luftbälgen der Vorderachse und der Hinterachse zugeordneten Luftbalgventilen zu einer Entlüftung, gemäß dem Oberbegriff von Anspruch 1.

Schwere Nutzfahrzeuge haben im beladenen und im unbeladenen Zustand eine ungleiche Gewichtsverteilung in Bezug auf die auf die Hinterachse und die Vorderachse wirkenden Lasten. Während im unbeladenen Zustand die Hinterachse weitgehend entlastet ist, wirkt auf die Vorderachse die Last des Fahrerhauses mit den Aggregaten und der Antriebsmaschine. Im beladenen Zustand ist oftmals die auf die Hinterachse wirkende Last größer als die an der Vorderachse. Infolgedessen würde sich das Nutzfahrzeug abhängig vom Beladungszustand an der Vorderachse und an der Hinterachse unterschiedlich schnell heben bzw. absenken. Um demgegenüber ein gleichmäßiges Heben bzw. Senken zu erzielen, werden die den Luftfederbälgen an der Vorderachse und der Hinterachse zugeordneten Luftbalgventilen mit relativ hoher Pulsfrequenz beaufschlagt. Dies bringt jedoch den Nachteil einer hohen mechanischen Belastung für die Luftbalgventile mit sich. Weiterhin ist die unterschiedliche Hebe- bzw. Senkgeschwindigkeit durch diese Maßnahme nicht immer ausgleichbar.

Eine gattungsgemäße Luftfederungseinrichtung ist in der DE 42 43 577 A1 offenbart, wobei im Strömungsweg zwischen einem Druckluftvorrat und den Luftfederbälgen der Vorderachse und der Hinterachse einerseits und im Strömungsweg zwischen den Luftfederbälgen der Vorderachse und der Hinterachse und einer Entlüftung andererseits eine Drossel schaltbar ist, wobei die Drossel erst in einer Phase zugeschaltet wird, in welcher die Regelabweichung zwischen einem Soll-Niveau und einem Ist-Niveau gering ist, um ein Überschwingen zu vermeiden. Hingegen werden bei noch großen Regelabweichungen die Luftfederbälge der Vorderachse und der Hinterachse drosselfrei be- bzw. entlüftet, um in der Anfangsphase der Regelung eine relativ große Hebe- bzw. Senkgeschwindigkeit zu erzielen. Das Gleiche gilt auch für die in der DE 195 15 255 A1 offenbarte Luftfederungseinrichtung. Auf den belastungsabhängigen Unterschied in der Hebe- bzw. Senkgeschwindigkeit an der Vorderachse und an der Hinterachse hat dies jedoch keine Auswirkungen.

Der vorliegenden Erfindung liegt demgegenüber die Aufgabe zugrunde, eine Luftfederungseinrichtung der eingangs erwähnten Art derart weiter zu entwickeln, dass ein gleichmäßiges Heben und Senken eines Fahrzeugs an der Vorderachse und der Hinterachse im beladenen wie auch im unbeladenen Zustand möglich ist.

Diese Aufgabe wird erfindungsgemäß durch die Merkmale von Anspruch 1 gelöst.

### Vorteile der Erfindung

Die Erfindung basiert gemäß einer ersten Variante auf dem Gedanken, dass einerseits die Druckluft, welche vom Druckluftvorrat über das zentrale Belüftungsventil den Luftbälgen der Hinterachse zuströmt wie auch die Druckluft, welche aus den Luftbälgen der Vorderachse über das zentrale Entlüftungsventil durch die Entlüftung in die Atmosphäre entlüftet wird, durch wenigstens eine Drossel hindurch strömt und dass andererseits eine Belüftung der Luftbälge der Vorderachse mit Druckluft aus dem Druckluftvorrat über das durchgeschaltete zentrale Belüftungsventil und die durchgeschalteten Luftbalgventile der Vorderachse sowie die Entlüftung der Luftbälge der Hinterachse über das durchgeschaltete zentrale Entlüftungsventil und die durchgeschalteten Luftbalgventile der Hinterachse drosselfrei erfolgt.

Gemäß einer weiteren Variante strömt einerseits die Druckluft, welche vom Druckluftvorrat über das zentrale Belüftungsventil den Luftbälgen der Vorderachse zuströmt wie auch die Druckluft, welche aus den Luftbälgen der Hinterachse über das zentrale Entlüftungsventil durch die Entlüftung in die Atmosphäre entlüftet wird, durch wenigstens eine Drossel hindurch und andererseits erfolgt eine Belüftung der Luftbälge der Hinterachse mit Druckluft aus dem Druckluftvorrat über das durchgeschaltete zentrale Belüftungsventil und die durchgeschalteten Luftbalgventile der Hinterachse sowie die Entlüftung der Luftbälge der Vorderachse über das durchgeschaltete zentrale Entlüftungsventil und die durchgeschalteten Luftbalgventile der Vorderachse drosselfrei.

Welche der beiden Alternativen für die Lösung der erfindungsgemäßen Aufgabe günstiger ist, hängt jeweils von der Verteilung des Gewichts auf Vorderachse und Hinterachse ab, d.h. davon, wo schneller Druck auf- bzw. abgebaut werden soll, um ein gleichmäßiges Heben und Senken zu gewährleisten.

Infolge der Drossel und der Anordnung des zentralen Belüftungsventils und des zentralen Entlüftungsventils sind die Zeiten, welche für den Druckaufbau bzw. den Druckabbau in den Luftbälgen der Vorderachse und der Hinterachse benötigt werden, unterschiedlich. Bei geeigneter Auslegung des Strömungsquerschnitts der Drossel, welche als Drossel mit einstellbarem Strömungsquerschnitt oder als Drossel mit festem Strömungsquerschnitt ausgeführt sein kann, kann eine identische Hebe- und Senkgeschwindigkeit an Vorderachse und Hinterachse eingestellt werden. Dies bringt auch den Vorteil mit sich, dass die Pulsfrequenz der Luftbalgventile herabgesetzt werden kann, was sich positiv auf deren Lebensdauer auswirkt.

Durch die in den Unteransprüchen aufgeführten Maßnahmen sind vorteilhafte Weiterbildungen und Verbesserungen der in Patentanspruch 1 angegebenen Erfindung möglich.

Besonders bevorzugt ist die Drossel in einer Druckluftleitung angeordnet, welche mit Anschlüssen der Luftbalgventile, des zentralen Belüftungsventils und des zentralen Entlüftungsventils in Strömungsverbindung steht.

Gemäß einer weiteren Maßnahme können wenigstens die Luftbalgventile, das zentrale Belüftungsventil, das zentrale Entlüftungsventil, die Entlüftung und die Drossel in einem Ventilblock zusammengefasst sein, was eine vorteilhaft kompakte Baugröße mit sich bringt.

Besonders bevorzugt wird das zentrale Belüftungsventil durch ein 2/2-Wegeventil gebildet, welches den Vorrat zu den Luftbalgventilen durchschaltet oder diesen Strömungsweg sperrt. Ebenso ist das zentrale Entlüftungsventil ein 2/2-Wegeventil, welches die Entlüftung zu den Luftbalgventilen durchschaltet oder diesen Strömungsweg sperrt. Nicht zuletzt ist auch zumindest an der Hinterachse und an der Vorderachse den Luftbälgen jeder Fahrzeugseite ein 2/2-Wegeventil als Luftbalgventil zugeordnet ist. Zur elektrischen Ansteuerung sind wenigstens einige der Ventile als Magnetventile ausgebildet.

Genaueres geht aus der folgenden Beschreibung eines Ausführungsbeispiels hervor.

### Zeichnungen

Nachstehend ist ein Ausführungsbeispiel der Erfindung in der Zeichnung dargestellt und in der nachfolgenden Beschreibung näher erläutert. In der Zeichnung zeigt die einzige Figur einen schematischen Funktionsschaltplan einer Luftfederungseinrichtung gemäß einer bevorzugten Ausführungsform der Erfindung.

### Beschreibung des Ausführungsbeispiels

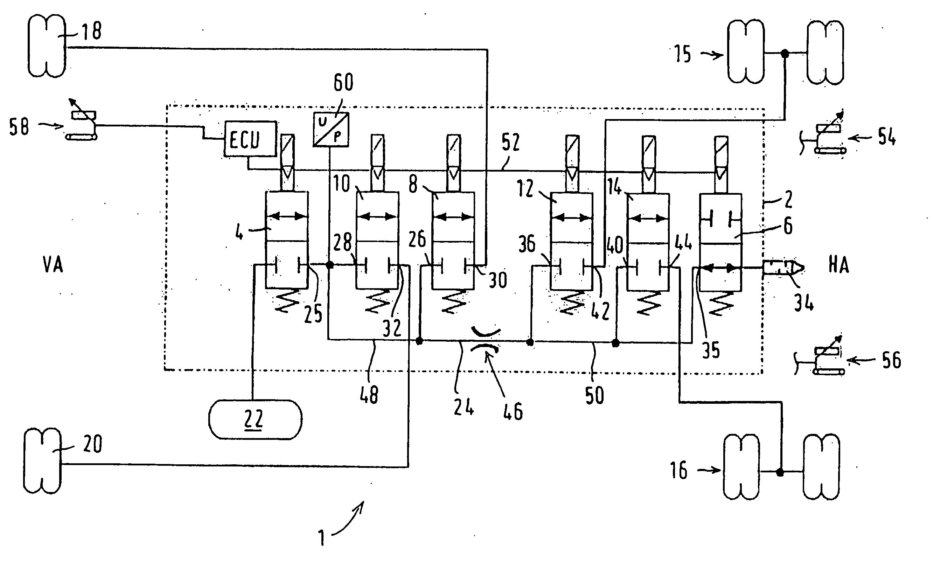

Die in Fig.1 insgesamt mit 1 bezeichnete Ausführungsform einer Luftfederungseinrichtung eines Nutzfahrzeugs umfasst einen einer angetriebenen Hinterachse HA und einer gelenkten Vorderachse VA zugeordneten Ventilblock 2, welcher in der Figur durch das mit Strichpunkten gezeichnete Rechteck symbolisiert ist. Er beinhaltet ein zentrales Belüftungsventil 4, ein zentrales Entlüftungsventil 6, sowie beispielsweise vier Luftbalgventile 8, 10, 12, 14, von welchem je eines einem Luftbalg oder einer Gruppe von Luftbälgen zugeordnet ist. Für die Hinterachse HA sind beispielsweise je Seite ein Paar Luftbälge 15, 16, für die Vorderachse VA je Seite ein Luftbalg 18, 20 vorgesehen. Generell kann das Luftvolumen und/oder die Anzahl der Luftbälge 15, 16 an der Hinterachse HA größer sein als das Luftvolumen und/oder die Anzahl der Luftbälge 18, 20 an der Vorderachse VA, da die Hinterachse HA in beladenem Zustand in der Regel höher belastet ist und ein größeres Luftvolumen eine größere Tragkraft bedingt.

Das zentrale Belüftungsventil 4 bringt entweder einen Druckluftvorrat 22 mit einer zentralen Druckluftleitung 24 oder einem rail in Verbindung oder sperrt diesen Strömungsweg. An die zentrale Druckluftleitung 24 sind ein Druckausgang 25 des zentralen Belüftungsventils 4 und Druckeingänge 26, 28 der der Vorderachse VA zugeordneten Luftbalgventile 18, 20 angeschlossen, wobei ein Druckausgang 30 des einen Luftbalgventils 8 mit dem rechten Luftbalg 18 der Vorderachse VA und ein Druckausgang 32 des anderen Luftbalgventils 10 mit dem linken Luftbalg 20 der Vorderachse VA in Strömungsverbindung steht.

Das zentrale Entlüftungsventil 6 bringt entweder eine Entlüftung 34 mit der zentralen Druckluftleitung 24 in Verbindung oder sperrt diesen Strömungsweg.

An die Druckluftleitung 24 sind dann ein Druckausgang 35 des zentralen Entlüftungsventils 6 und weiterhin Druckeingänge 36, 40 der der Hinterachse HA zugeordneten Luftbalgventile 12, 14 angeschlossen, wobei ein Druckausgang 42 des einen Luftbalgventils 12 mit dem rechten Paar Luftbälge 15 der Hinterachse HA und ein Druckausgang 44 des anderen Luftbalgventils 14 mit dem linken Paar Luftbälge 16 der Hinterachse HA in Strömungsverbindung steht.

Gemäß einer ersten Variante erfolgt die Druckluftkommunikation zwischen dem Druckluftvorrat 22, dem zentralen Belüftungsventil 4 und den der Vorderachse VA zugeordneten Luftbalgventilen 8, 10 einerseits und der Entlüftung 34, dem zentralen Entlüftungsventil 6 und den der Hinterachse HA zugeordneten Luftbalgventilen 12, 14 andererseits durch eine Drossel 46, welche in der zentralen Druckluftleitung 24 angeordnet ist. Diese Situation ist in der Figur dargestellt. Diese Variante ist günstiger, wenn das auf der Vorderachse VA lastende Gewicht generell größer ist als das auf der Hinterachse HA lastende ist.

Infolgedessen muss einerseits die Druckluft, welche vom Druckluftvorrat 22 über das zentrale Belüftungsventil 4 den Luftbälgen 15, 16 der Hinterachse HA zuströmt wie auch die Druckluft, welche aus den Luftbälgen 18, 20 der Vorderachse VA über das zentrale Entlüftungsventil 6 durch die Entlüftung 34 in die Atmosphäre entlüftet werden soll durch die Drossel 46 hindurch strömen. Andererseits erfolgt die Belüftung der Luftbälge 18, 20 der Vorderachse VA mit Druckluft aus dem Druckluftvorrat 22 über das durchgeschaltete zentrale Belüftungsventil 4 und die durchgeschalteten Luftbalgventile 8, 10 der Vorderachse VA sowie die Entlüftung der Luftbälge 15, 16 der Hinterachse HA über das durchgeschaltete zentrale Entlüftungsventil 6 und die durchgeschalteten Luftbalgventile 12, 14 der Hinterachse HA drosselfrei. Dann ist die zentrale Druckluftleitung 24 durch die Drossel 46 zweigeteilt, nämlich einerseits in einen ersten, der Seite mit dem Druckluftvorrat 22, dem zentralen Belüftungsventil 4 und den Luftbalgventilen 8, 10 und Luftbälgen 18, 20 der Vorderachse VA zugeordneten Abschnitt 48 und andererseits in einen zweiten, der Entlüftung 34, dem zentralen Entlüftungsventil 6 und den Luftbalgventilen 12, 14 und Luftbälgen 15, 16 der Hinterachse HA zugeordneten Abschnitt 50.

Gemäß einer zweiten Variante kann spiegelbildlich die Drossel 46 auch zwischen dem Druckluftvorrat 22, dem zentralen Belüftungsventil 4 und dem wenigstens einen der Hinterachse HA zugeordneten Luftbalgventil 12, 14 einerseits und der Entlüftung 34, dem zentralen Entlüftungsventil 6 und dem wenigstens einen der Vorderachse VA zugeordneten Luftbalgventil 8, 10 andererseits angeordnet sein. Diese Variante ist günstiger, wenn das auf der Hinterachse HA lastende Gewicht generell größer ist als das auf der Vorderachse VA lastende ist.

In beiden Fällen kann die Drossel 46 als Drossel mit einstellbarem Strömungsquerschnitt oder als Drossel mit festem Strömungsquerschnitt ausgeführt sein. Darüber hinaus können die Luftbalgventile 8, 10, 12, 14, das zentrale Belüftungsventil 4, das zentrale Entlüftungsventil 6, die Entlüftung 34 und die Drossel 46 in dem Ventilblock 2 zusammengefasst sein. Die zentrale Druckluftleitung 24 ist dann beispielsweise als Druckluftkanal im Ventilblock 2 ausgebildet.

Sämtliche Ventile 4, 6, 8, 10, 12, 14 sind vorzugsweise als elektrisch gesteuerte Magnetventile ausgebildet, d.h. dass sie jeweils durch ein elektronisches Steuergerät ECU über eine elektrische Steuerleitung 52, beispielsweise einen Datenbus angesteuert werden. Drei Niveaugeber, ein der rechten Seite der Hinterachse HA zugeordneter Niveaugeber 54, ein der linken Seite der Hinterachse HA zugeordneter Niveaugeber 56 sowie ein der Vorderachse VA zugeordneter Niveaugeber 58 messen mit Hilfe von Drehpotentiometern, deren Spannungsabgriff über je einen Antriebshebel mit der Vorderachse VA bzw. mit der Hinterachse HA verbunden ist, den Abstand zwischen der Vorderachse VA bzw. der Hinterachse HA und einem Fahrzeugaufbau. Die Niveaugeber 54, 56, 58 sind mit dem elektronischen Steuergerät ECU signalübertragend verbunden. Weiterhin ist das elektronische Steuergerät ECU mit dem Ventilblock 2 zu einer Baueinheit zusammengefasst, beispielsweise dadurch, dass diese Baugruppen in einem gemeinsamen Gehäuse aus Kunststoff oder aus Aludruckguss untergebracht sind. Ein Drucksensor 60 misst den Druck in der zentralen Druckleitung 24 und liefert ein entsprechendes Drucksignal an das elektronische Steuergerät ECU, welches daraufhin einen beladungs- und niveauabhängigen Druck durch Öffnen und Schließen der Magnetventile 4, 6, 8, 10, 12, 14 in die Luftbälge 15, 16, 18, 10 einregelt.

Vor diesem Hintergrund ist die Funktionsweise der erfindungsgemäßen Luftfederungseinrichtung 1 wie folgt :

Ausgehend von der oben beschriebenen ersten, in der Figur gezeigten Variante der Luftfederungseinrichtung 1 und einem abgesenkten Niveau, welches beispielsweise zum Aufsatteln eines Zugfahrzeugs gewünscht ist, soll ein höheres Niveau eingestellt werden. Dann haben die mit der Hinterachse HA und der Vorderachse VA verbundenen Hebel die Schleifer der Drehpotentiometer der Niveaugeber 54, 56, 58 auf der jeweiligen Potentiometerbahn in die Stellung "Heben" verdreht. Das Steuergerät ECU erkennt die Spannungsabweichung und gibt gleichzeitig elektrische Stellbefehle an das zentrale Entlüftungsventil 6, welches daraufhin den Strömungsweg zur Entlüftung 34 verschließt, sowie an das zentrale Belüftungsventil 4 und die Luftbalgventile 8, 10, 12, 14 der Hinterachse HA und der Vorderachse VA, die in Durchgangsstellung geschaltet werden, Letztere getaktet zwischen der Öffnungs- und Schließstellung.

Bedingt durch die Drossel 46 ist der Druck im ersten, der Vorderachse VA zugeordneten Abschnitt 48 zunächst größer als im zweiten, der Hinterachse HA zugeordneten Abschnitt 50 der zentralen Druckluftleitung 24, was zur Folge hat, dass sich der Druck in den Luftbälgen 18, 20 der höher belasteten Vorderachse VA schneller aufbaut als in den Luftbälgen 15, 16 der niedriger belasteten Hinterachse HA, weil die Druckluft in die Luftbälge 18, 20 der Vorderachse VA ungedrosselt, in die Luftbälge 15, 16 der Hinterachse HA aber gedrosselt einströmt. Dazu trägt auch bei, dass das bezüglich des Drucks zu steigernde Luftvolumen in den Luftbälgen 15, 16 der Hinterachse HA größer ist als in den Luftbälgen 18, 20 der Vorderachse VA, da die Hinterachsluftbälge 15, 16 je Seite doppelt, an der Vorderachse VA jedoch nur einfach vorhanden sind. Durch ent-Durch entsprechende Dimensionierung der Drossel 46, die der Fachmann im Einzellfall an das jeweilige Fahrzeug anpasst, kann dann erreicht werden, dass sich der Fahrzeugaufbau im Bereich der Vorderachse VA und der Hinterachse HA gleich schnell anhebt, obwohl eine ungleiche Lastverteilung vorliegt. Dabei werden abhängig von den Signalen der Niveaugeber 54, 56, 58 die Luftbalgventile 8, 10, 12, 14 der Vorderachse VA und der Hinterachse HA getaktet geschaltet, bis das gewünschte Niveau erreicht ist.

Im anderen Fall, d.h. bei generell höher belasteter Hinterachse HA und geringer belasteter Vorderachse VA ist die oben beschriebene zweite Variante günstiger, bei welcher die Drossel 46 zwischen dem Druckluftvorrat 22, dem zentralen Belüftungsventil 4 und dem wenigstens einen der Hinterachse HA zugeordneten Luftbalgventil 12, 14 einerseits und der Entlüftung 34, dem zentralen Entlüftungsventil 6 und dem wenigstens einen der Vorderachse VA zugeordneten Luftbalgventil 8, 10 andererseits angeordnet ist. In diesem Fall werden die Luftbälge 15, 16 der höher belasteten Hinterachse HA schneller belüftet als die der Vorderachse VA, was dann zu einer gleichmäßigen Hebebewegung führt.

Zum Absenken des Niveaus des Fahrzeugaufbaus drehen die mit den Fahrzeugachsen verbundenen Hebel die Schleifer der Drehpotentiometer der Niveaugeber 54, 56, 58 auf der jeweiligen Potentiometerbahn in die Stellung "Senken". Das Steuergerät ECU erkennt die Spannungsabweichung und gibt elektrische Stellbefehle an das zentrale Belüftungsventil 4, das zentrale Entlüftungsventil 6 und die Luftbalgventile 8, 10, 12, 14 der Vorderachse VA und der Hinterachse HA. Dann wird das zentrale Belüftungsventil 4 in Sperrstellung und das zentrale Entlüftungsventil 6 und sämtliche Luftbalgventile 8, 10, 12, 14 in Durchgangsstellung geschaltet, letztere vorzugsweise getaktet.

Beim Absenken des Fahrzeugaufbaus wird dann durch die Drossel 46 in der Einbausituation gemäß der ersten Variante sichergestellt, dass der sich der Druck in den Luftbälgen 15, 16 der Hinterachse HA schneller abbaut als in den Luftbälgen 18, 20 der Vorderachse VA, da aus Ersteren die Druckluft ungedrosselt, aus Letzteren jedoch durch die Drossel 46 hindurch der Entlüftung 34 zugeführt wird. Dies bewirkt, dass sich der Fahrzeugaufbau im Bereich der höher belasteten Vorderachse VA, welcher sich ansonsten wegen des höheren Gewichts schneller als der Fahrzeugaufbau im Bereich der geringer belasteten Hinterachse HA absenken würde, langsamer und etwa mit dergleichen Geschwindigkeit wie der Bereich des Fahrzeugaufbaus an der Hinterachse absenken.

Im umgekehrten Fall der zweiten Variante würde sich dagegen der Fahrzeugaufbau an der schwereren Hinterachse HA schneller absenken als der Fahrzeugaufbau an der leichteren Vorderachse VA, wenn nicht die Drossel 46 dafür sorgte, dass eine schnelle Entlüftung der Luftbälge 15, 16 der Hinterachse HA verhindert wird.

Durch eine entsprechende individuelle Ansteuerung der Luftbalgventile 8, 10, 12, 14 der Hinterachse HA und der Vorderachse VA kann das Niveau der beiden Fahrzeugseiten unterschiedlich angepasst, werden, was im Falle einer exzentrischen Ladung notwendig sein kann. Ebenfalls ist ein unterschiedliches Niveau an der Hinterachse HA und an der Vorderachse VA durch eine entsprechende Ansteuerung der Luftbalgventile möglich. Mit dem beschriebenen Aufbau der Luftfederungseinrichtung 1 kann folglich nicht nur eine lndividualregelung sondern auch eine Gleichdruckregelung realisiert werden, durch gleichzeitiges und seitenweises Ansteuern der beiden Luftbalgventile 8, 10, 12, 14 der Vorderachse VA und der Hinterachse HA, wobei zwischen der rechten und linken Fahrzeugseite alternierend umgeschaltet wird. Der jeweilige Regelalgorithmus kann wahlweise im Steuergerät ECU programmiert sein. Nicht zuletzt kann das Nutzfahrzeug auch mit einer Liftachse ausgestattet sein, welche ebenfalls durch Luftbälge gefedert ist, die dann zusammen mit den zugeordneten Luftbalgventilen ebenfalls Bestandteil der Luftfederungseinrichtung 1 sind.

### Bezugszeichenliste

- 1: Luftfederungseinrichtung
- 2: Ventilblock
- 4: Belüftungsventil
- 6: Entlüftungsventil
- 8: Luftbalgventil VA rechts
- 10: Luftbalgventil VA links
- 12: Luftbalgventil HA rechts
- 14: Luftbalgventil HA links
- 15: Luftbalg HA rechts
- 16: Luftbalg HA links
- 18: Luftbalg VA rechts
- 20: Luftbalg VA links
- 22: Druckluftvorrat
- 24: Druckluftleitung
- 25: Druckausgang
- 26: Druckeingang
- 28: Druckeingang
- 30: Druckausgang
- 32: Druckausgang
- 34: Entlüftung
- 35: Druckausgang
- 36: Druckeingang
- 40: Druckeingang
- 42: Druckausgang
- 44: Druckausgang
- 46: Drossel
- 48: erster Abschnitt
- 50: zweiter Abschnitt
- 52: Steuerleitung
- 54: Niveaugeber
- 56: Niveaugeber
- 58: Niveaugeber
- 60: Drucksensor

## Patentansprüche

1. Luftfederungseinrichtung (1) für Fahrzeuge, insbesondere für Nutzfahrzeuge, beinhaltend
a) wenigstens ein einem Luftbalg oder einer Gruppe von Luftbälgen (18; 20) der Vorderachse (VA) zugeordnetes Luftbalgventil (8; 10) zum individuellen Be- und Entlüften dieses Luftbalgs oder dieser Gruppe von Luftbälgen (18; 20),
b) wenigstens ein einem Luftbalg oder einer Gruppe von Luftbälgen (15; 16) der Hinterachse (HA) zugeordnetes Luftbalgventil (12; 14) zum individuellen Be- und Entlüften dieses Luftbalgs oder dieser Gruppe von Luftbälgen (15; 16), sowie
c) wenigstens ein zentrales Belüftungsventil (4) zum Versorgen der den Luftbälgen (15; 16; 18; 20) der Vorderachse (VA) und der Hinterachse (HA) zugeordneten Luftbalgventilen (8; 10; 12; 14) mit Druckluft aus einem Druckluftvorrat (22) und
d) wenigstens ein zentrales Entlüftungsventil (6) zum Abführen von Druckluft von den den Luftbälgen (15; 16; 18; 20) der Vorderachse (VA) und der Hinterachse (HA) zugeordneten Luftbalgventilen (8; 10; 12; 14) zu einer Entlüftung (34), **dadurch gekennzeichnet, dass**
e) einerseits Druckluft, welche vom Druckluftvorrat (22) über das zentrale Belüftungsventil (4) den Luftbälgen (15, 16) der Hinterachse (HA) zuströmt wie auch Druckluft, welche aus den Luftbälgen (18; 20) der Vorderachse (VA) über das zentrale Entlüftungsventil (6) durch die Entlüftung (34) in die Atmosphäre entlüftet wird, durch wenigstens eine Drossel (46) hindurch strömt und dass andererseits eine Belüftung der Luftbälge (18; 20) der Vorderachse (VA) mit Druckluft aus dem Druckluftvorrat (22) über das durchgeschaltete zentrale Belüftungsventil (4) und die durchgeschalteten Luftbalgventile (8, 10) der Vorderachse (VA) sowie eine Entlüftung der Luftbälge (15; 16) der Hinterachse (HA) über das durchgeschaltete zentrale Entlüftungsventil (6) und die durchgeschalteten Luftbalgventile (12, 14) der Hinterachse (HA) drosselfrei erfolgt, oder dass
f) einerseits Druckluft, welche vom Druckluftvorrat (22) über das zentrale Belüftungsventil (4) den Luftbälgen (15, 16) der Vorderachse (VA) zuströmt wie auch Druckluft, welche aus den Luftbälgen (18; 20) der Hinterachse (HA) über das zentrale Entlüftungsventil (6) durch die Entlüftung (34) in die Atmosphäre entlüftet wird, durch wenigstens eine Drossel (46) hindurch strömt und dass andererseits eine Belüftung der Luftbälge (18; 20) der Hinterachse (HA) mit Druckluft aus dem Druckluftvorrat (22) über das durchgeschaltete zentrale Belüftungsventil (4) und die durchgeschalteten Luftbalgventile (8, 10) der Hinterachse (HA) sowie eine Entlüftung der Luftbälge (15; 16) der Vorderachse (VA) über das durchgeschaltete zentrale Entlüftungsventil (6) und die durchgeschalteten Luftbalgventile (12, 14) der Vorderachse (VA) drosselfrei erfolgt.

2. Luftfederungseinrichtung nach Anspruch 1, **dadurch gekennzeichnet, dass** das zentrale Belüftungsventil (4) entweder den Druckluftvorrat (22) mit einer zentralen Druckluftleitung (24) in Verbindung bringt oder diesen Strömungsweg sperrt und dass das zentrale Entlüftungsventil (6) entweder die Entlüftung (34) mit der zentralen Druckluftleitung (24) in Verbindung bringt oder diesen Strömungsweg sperrt, wobei die zentrale Druckluftleitung (24) durch die wenigstens eine Drossel (46) zweigeteilt ist, nämlich
a) einerseits in einen ersten, dem Druckluftvorrat (22), dem zentralen Belüftungsventil (4) und den Luftbalgventilen (8; 10) und Luftbälgen (18; 20) der Vorderachse (VA) zugeordneten Abschnitt (48) und andererseits in einen zweiten, der Entlüftung (34), dem zentralen Entlüftungsventil (6) und den Luftbalgventilen (12; 14) und Luftbälgen (15; 16) der Hinterachse (HA) zugeordneten Abschnitt (50), oder
b) einerseits in einen ersten, dem Druckluftvorrat (22), dem zentralen Belüftungsventil (4) und den Luftbalgventilen (12; 14) und Luftbälgen (15; 16) der Hinterachse (HA) zugeordneten Abschnitt und andererseits in einen zweiten, der Entlüftung (34), dem zentralen Entlüftungsventil (6) und den Luftbalgventilen (8; 10) und Luftbälgen (18; 20) der Vorderachse (VA) zugeordneten Abschnitt.

3. Luftfederungseinrichtung nach Anspruch 1 oder 2, **dadurch gekennzeichnet, dass** die wenigstens eine Drossel (46) als Drossel mit einstellbarem Strömungsquerschnitt oder als Drossel mit festem Strömungsquerschnitt ausgeführt ist.

4. Luftfederungseinrichtung nach Anspruch 2 oder 3, **dadurch gekennzeichnet, dass** die zentrale Druckluftleitung (24) mit Anschlüssen (25; 26; 28; 35; 36; 40) der Luftbalgventile (8; 10; 12; 14), des zentralen Belüftungsventils (4) und des zentralen Entlüftungsventils (6) in Strömungsverbindung steht.

5. Luftfederungseinrichtung nach wenigstens einem der vorhergehenden Ansprüche, **dadurch gekennzeichnet, dass** wenigstens die Luftbalgventile (8; 10; 12; 14), das zentrale Belüftungsventil (4), das zentrale Entlüftungsventil (6), die Entlüftung (34) und die Drossel (46) in einem Ventilblock (2) zusammengefasst sind.

6. Luftfederungseinrichtung nach wenigstens einem der vorhergehenden Ansprüche, **dadurch gekennzeichnet, dass** das zentrale Belüftungsventil (4) durch ein 2/2-Wegeventil gebildet wird, welches den Druckluftvorrat (22) zu den Luftbalgventilen (8; 10; 12; 14) durchschaltet oder diesen Strömungsweg sperrt.

7. Luftfederungseinrichtung nach wenigstens einem der vorhergehenden Ansprüche, **dadurch gekennzeichnet, dass** das zentrale Entlüftungsventil (6) durch ein 2/2-Wegeventil gebildet wird, welches die Entlüftung (34) zu den Luftbalgventilen (8; 10; 12; 14) durchschaltet oder diesen Strömungsweg sperrt.

8. Luftfederungseinrichtung nach wenigstens einem der vorhergehenden Ansprüche, **dadurch gekennzeichnet, dass** zumindest an der Hinterachse (HA) und an der Vorderachse (VA) den Luftbälgen (15; 16; 18; 20) jeder Fahrzeugseite ein 2/2-Wegeventil als Luftbalgventil zugeordnet ist.

9. Luftfederungseinrichtung nach wenigstens einem der vorhergehenden Ansprüche, **dadurch gekennzeichnet, dass** wenigstens einige der Ventile (4; 6; 8; 10; 12; 14) elektrisch ansteuerbare Magnetventile sind.

## Claims

1. Pneumatic suspension system (1) for vehicles, in particular commercial vehicles, comprising:
(a) at least one pneumatic bellows valve (8; 10) assigned to a pneumatic bellows or a group of pneumatic bellows (18; 20) on the front axle (VA) for individually aerating and venting this pneumatic bellows or this group of pneumatic bellows (18; 20),
(b) at least one pneumatic bellows valve (12; 14) assigned to a pneumatic bellows or a group of pneumatic bellows (15; 16) on the rear axle (HA) for individually aerating and venting this pneumatic bellows or this group of pneumatic bellows (18; 20), as well as
(c) at least one central aerating valve (4) for supply of compressed air from a compressed-air reservoir (22) to said pneumatic bellows valves (8; 10; 12; 14) assigned to said pneumatic bellows (15; 16; 18; 20) on said front axle (VA) and on said rear axle (HA) and
(d) at least one central venting valve (6) for discharge of compressed air from said pneumatic bellows valve (8; 10; 12; 14) assigned to said pneumatic bellows (15; 16; 18; 20) on said front axle (VA) and on said rear axle (HA) towards a venting means (34), **characterised in that**
(e) on the one hand, compressed air flowing from said compressed-air reservoir (22) via said central aerating valve (4) to said pneumatic bellows (15, 16) on said rear axle (HA) and equally compressed air discharged from said pneumatic bellows (18; 20) on said front axle (VA) via said central venting valve (6) through said venting means (34) into the atmosphere flows through at least one throttle (46), and that, on the other hand, aeration of said pneumatic bellows (18, 20) on said front axle (VA) with compressed air from said compressed-air reservoir (22) is performed via said central aerating valve (4) in through-connected condition and said pneumatic bellows valves (8, 10) on said front axle (VA) in through-connected condition, as well as venting of said pneumatic bellows (15, 16) on said rear axle (HA) is performed via said central venting valve (6) in through-connected condition and said pneumatic bellows valves (12, 14) in through-connected condition on said rear axle (HA) without throttling, or that
(f) on the one hand, compressed air supplied from said compressed-air reservoir (22) via said central aerating valve (4) to said pneumatic bellows (15, 16) on said front axle (HA) and equally compressed air discharged from said pneumatic bellows (18; 20) on said rear axle (HA) is performed via said central venting valve (6) through said venting means (34) into the atmosphere, flows through at least one throttle (46) and that, on the other hand, aeration of said pneumatic bellows (18, 20) on said rear axle (HA) with compressed air from said compressed-air reservoir (22) is performed via said central aerating valve (4) in through-connected condition and said pneumatic bellows valves (8, 10) on said rear axle (HA) in through-connected condition, as well as venting of said pneumatic bellows (15, 16) on said front axle (VA) is performed via said central venting valve (6) in through-connected condition and said pneumatic bellows valves (12, 14) in through-connected condition on said front axle (VA) without throttling,

2. Pneumatic suspension system according to Claim 1, **characterised in that** said central aerating valve (4) either communicates said compressed-air reservoir (22) with a central compressed-air pipe (24) or blocks this flow path, and that said central venting valve (6) either communicates said venting means (34) with said central compressed-air pipe (24) or blocks this flow path, with said central compressed-air pipe (24) being divided into two sections by at least one throttle (46), specifically
(a) into a first section (48), on the one hand, which is assigned to said central aerating valve (4) and said pneumatic bellows valves (8; 10) and pneumatic bellows (18, 20) on said front axle (VA), and into a second section (50), on the other hand, which is assigned to said venting means (34), said central venting valve (6) and said pneumatic bellows valves (12; 14) and pneumatic bellows (15; 16) on said rear axle (HA), or
(b) into a first section, on the one hand, which is assigned to said central aerating valve (4) and said pneumatic bellows valves (12; 14) and pneumatic bellows (15, 16) on said rear axle (HA), and into a second section, on the other hand, which is assigned to said venting means (34), said central venting valve (6) and said pneumatic bellows valves (8; 10) and pneumatic bellows (18; 20) on said front axle (VA).

3. Pneumatic suspension system according to Claim 1 or 2, **characterised in that** said at least one throttle (46) is configured as throttle having an adjustable flow cross-section or as throttle having an invariable flow cross-section.

4. Pneumatic suspension system according to Claim 2 or 3, **characterised in that** said central compressed-air pipe (24) is in flow communication with ports (25; 26; 28; 35; 36; 40) of said pneumatic bellows valves (8; 10; 12; 14) of said central aerating valve (4) and said central venting valve (6).

5. Pneumatic suspension system according to at least one of the preceding Claims, **characterised in that** at least said pneumatic bellows valves (8; 10; 12; 14), said central aerating valve (4), said central venting valve (6), said venting means (34) and said throttle (46) are combined in a valve block (2).

6. Pneumatic suspension system according to at least one of the preceding Claims, **characterised in that** said central aerating valve (4) is formed by a 2/2-way valve which connects said compressed-air reservoir (22) through to said pneumatic bellows valves (8; 10; 12; 14) or blocks this flow path.

7. Pneumatic suspension system according to at least one of the preceding Claims, **characterised in that** said central venting valve (6) is formed by a 2/2-way valve which communicates said venting means (34) through to said pneumatic bellows valves (8; 10; 12; 14) or blocks this flow path.

8. Pneumatic suspension system according to at least one of the preceding Claims, **characterised in that** one 2/2-way valve as pneumatic bellows valves is assigned to said pneumatic bellows (15; 16; 18; 20) on each vehicle side at least on said rear axle (HA) and on said front axle (VA).

9. Pneumatic suspension system according to at least one of the preceding Claims, **characterised in that** at least some of said valves (4; 6; 8; 10; 12; 14) are electrically controllable solenoid valves.

## Revendications

1. Système de suspension pneumatique (1) pour véhicules, en particulier véhicules utilitaires, comprenant :
(a) au moins une soupape de soufflet pneumatique (8; 10) affectée à un soufflet pneumatique ou un groupe de soufflets pneumatiques (18; 20) de l'essieu avant (VA) pour la ventilation et la purge individuelle de ce soufflet pneumatique ou ce groupe de soufflets pneumatiques (18; 20),
(b) au moins une soupape de soufflet pneumatique (12; 14) affectée à un soufflet pneumatique ou un groupe de soufflets pneumatiques (15; 16) de l'essieu arrière (HA) pour la ventilation et la purge individuelle de ce soufflet pneumatique ou ce groupe de soufflets pneumatiques (18; 20), ainsi
(c) qu'au moins une soupape de ventilation centrale (4) pour l'alimentation en air comprimé à partir d'un réservoir de l'air comprimé (22) auxdites soupapes de soufflet pneumatiques (8; 10; 12; 14) affectées auxdits soufflets pneumatiques (15; 16; 18; 20) dudit essieu avant (VA) et dudit essieu arrière (HA) et
(d) au moins une soupape de purge d'air centrale (6) pour l'évacuation de l'air comprimé à partir de ladite soupape de soufflet pneumatique (8; 10; 12; 14) affectée auxdits soufflets pneumatiques (15; 16; 18; 20) dudit essieu avant (VA) et dudit essieu arrière (HA) vers un moyen de purge d'air (34),
**caractérisé en ce que**
(e) d'un côté, de l'air comprimé s'écoulant à partir dudit réservoir de l'air comprimé (22) via ladite soupape de ventilation centrale (4) vers lesdits soufflets pneumatiques (15, 16) dudit essieu arrière (HA) et également de l'air comprimé évacué à partir desdits soufflets pneumatiques (18; 20) dudit essieu avant (VA) via ladite soupape de purge d'air centrale (6) à travers ledit moyen de purge d'air (34) dans l'atmosphère s'écoule à travers au moins un élément étrangleur (46), et **en ce que**, de l'autre côté, la ventilation desdits soufflets pneumatiques (18, 20) dudit essieu avant (VA) en air comprimé à partir dudit réservoir de l'air comprimé (22) se fait via ladite soupape de ventilation centrale (4) en ligne et lesdites soupapes de soufflet pneumatiques (8, 10) dudit essieu avant (VA) en ligne, ainsi que l'évacuation desdits soufflets pneumatiques (15, 16) dudit essieu arrière (HA) se fait via ladite soupape de purge d'air centrale (6) en ligne et lesdites soupapes de soufflet pneumatiques (12, 14) en ligne dudit essieu arrière (HA) sans étranglement, ou **en ce**
(f) **que**, d'un côté, de l'air comprimé alimenté à partir dudit réservoir de l'air comprimé (22) via ladite soupape de ventilation centrale (4) vers lesdits soufflets pneumatiques (15, 16) dudit essieu avant (HA) et également de l'air comprimé purgé en dehors desdits soufflets pneumatiques (18; 20) dudit essieu arrière (HA) se fait via ladite soupape de purge d'air centrale (6) à travers ledit moyen de purge d'air (34) dans l'atmosphère, s'écoule à travers au moins un élément étrangleur (46) et **en ce que**, de l'autre côté, la ventilation desdits soufflets pneumatiques (18, 20) dudit essieu arrière (HA) en air comprimé provenant dudit réservoir de l'air comprimé (22) se fait via ladite soupape de ventilation centrale (4) en ligne et lesdites soupapes de soufflet pneumatiques (8, 10) dudit essieu arrière (HA) en ligne, pendant que la purge desdits soufflets pneumatiques (15, 16) dudit essieu avant (VA) se fait via ladite soupape de purge d'air centrale (6) en ligne et lesdites soupapes de soufflet pneumatiques (12, 14) en ligne dudit essieu avant (VA) sans étranglement,

2. Système de suspension pneumatique selon la revendication 1, **caractérisé en ce que** ladite soupape de ventilation centrale (4) soit met ledit réservoir de l'air comprimé (22) en communication avec un conduit de l'air comprimé central (24) ou arrête cette voie d'écoulement, et que ladite soupape de purge d'air centrale (6) soit met ledit moyen de purge d'air (34) en communication avec ledit conduit de l'air comprimé central (24) ou arrête cette voie d'écoulement, audit conduit de l'air comprimé central (24) étant tronçonné en deux sections par au moins un élément étrangleur (46), notamment
(a) en une première section (48), d'un côté, qui est affectée à ladite soupape de ventilation centrale (4) et lesdites soupapes de soufflet pneumatiques (8; 10) et soufflets pneumatiques (18, 20) dudit essieu avant (VA), et en une deuxième section (50), de l'autre côté, qui est affectée audit moyen de purge d'air (34), à ladite soupape de purge d'air centrale (6) et auxdites soupapes de soufflet pneumatiques (12; 14) et auxdits soufflets pneumatiques (15; 16) dudit essieu arrière (HA), ou
(b) en une première section, d'un côté, qui est affectée à ladite soupape de ventilation centrale (4) et auxdites soupapes de soufflet pneumatiques (12; 14) et auxdits soufflets pneumatiques (15, 16) dudit essieu arrière (HA), et en une deuxième section, de l'autre côté, qui est affectée audit moyen de purge d'air (34), à ladite soupape de purge d'air centrale (6) et auxdites soupapes de soufflet pneumatiques (8; 10) et auxdits soufflets pneumatiques (18; 20) dudit essieu avant (VA).

3. Système de suspension pneumatique selon la revendication 1 or 2, **caractérisé en ce que** ledit au moins un élément étrangleur (46) est configuré sous forme d'un élément étrangleur ayant un profil en travers d'écoulement ajustable ou sous forme d'un élément étrangleur ayant un profil en travers d'écoulement invariable.

4. Système de suspension pneumatique selon la revendication 2 or 3, **caractérisé en ce que** ledit conduit de l'air comprimé central (24) se trouve en communication d'écoulement aux raccords (25; 26; 28; 35; 36; 40) desdites soupapes de soufflet pneumatiques (8; 10; 12; 14) de ladite soupape de ventilation centrale (4) et ladite soupape de purge d'air centrale (6).

5. Système de suspension pneumatique selon au moins une quelconque des revendications précédentes, **caractérisé en ce qu'**au moins lesdites soupapes de soufflet pneumatiques (8; 10; 12; 14), ladite soupape de ventilation centrale (4), ladite soupape de purge d'air centrale (6), ledit moyen de purge d'air (34) et ledit élément étrangleur (46) sont combinés dans une lanterne de soupape (2).

6. Système de suspension pneumatique selon au moins une quelconque des revendications précédentes, **caractérisé en ce que** ladite soupape de ventilation centrale (4) est constituée par une soupape à 2/2 voies, qui raccorde ledit réservoir de l'air comprimé (22) en ligne auxdites soupapes de soufflet pneumatiques (8; 10; 12; 14) ou arrête cette voie d'écoulement.

7. Système de suspension pneumatique selon au moins une quelconque des revendications précédentes, **caractérisé en ce que** ladite soupape de purge d'air centrale (6) est constituée par une soupape à 2 voies, qui raccorde ledit moyen de purge d'air (34) en ligne auxdites soupapes de soufflet pneumatiques (8; 10; 12; 14) ou arrête cette voie d'écoulement.

8. Système de suspension pneumatique selon au moins une quelconque des revendications précédentes, **caractérisé en ce qu'**une soupape à 2/2 voies en tant que soupape de soufflet pneumatique est affectée auxdits soufflets pneumatiques (15; 16; 18; 20) de chaque côté du véhicule au moins à l'essieu derrière (HA) et à l'essieu avant (VA).

9. Système de suspension pneumatique selon au moins une quelconque des revendications précédentes, **caractérisé en ce qu'**au moins quelques-uns desdites soupapes (4; 6; 8; 10; 12; 14) sont des soupapes commandables par courant électrique.
